# EUROPÄISCHE PATENTSCHRIFT

(11) **EP 0 420 133 B1**
(45) Veröffentlichungstag und Bekanntmachung des Hinweises auf die Patenterteilung: **14.06.1995**
(21) Anmeldenummer: 90118360.8
(22) Anmeldetag: 25.09.1990
(51) Int. Cl.: C09D 4/06, C09D 133/04, C08F 299/00, C08F 8/32

(54) **Bindemittelzusammensetzung und deren Verwendung in Überzugsmitteln**
Binder compositions and their use in coatings
Compositions de liants et leur utilisation pour les revêtements

(30) Priorität: 29.09.1989 DE 3932517
(43) Veröffentlichungstag der Anmeldung: 03.04.1991
(73) Patentinhaber: Herberts Gesellschaft mit beschränkter Haftung, 42285 Wuppertal (DE)
(72) Erfinder: Bederke, Klaus, Dr., D-4322 Sprockhövel (DE); Kerber, Hermann, D-5600 Wuppertal 2 (DE); Schubert, Walter, Dr., D-5600 Wuppertal 12 (DE); Bremer, Gerhard, Dr., D-5020 Frechen 1 (DE); Brock, Thomas, Dr., D-5030 Hürth-Hermühlheim (DE); Sadowski, Fritz, Dr., D-5024 Brauweiler bei Köln (DE)
(74) Vertreter: Türk, Gille, Hrabal, Leifert

(56) Entgegenhaltungen:
- EP-A- 0 199 087
- EP-A- 0 224 158

## Beschreibung

Die Erfindung betrifft ein Zwei-Komponenten-Bindemittel, das für Überzugsmittelzusammensetzungen geeignet ist.

In der DE-A-37 13 511 werden Zweikomponenten-Lackbindemittel auf der Basis von Methacrylsäure-2-acetoacetoxy-ethylestern sowie deren Umsetzungsprodukte mit Aldehyden oder Ketonen und Aminen beschrieben. Diese Systeme härten bei Raumtemperatur jedoch sehr langsam und führen zu gelb gefärbten Produkten.

In der EP-A-0 160 824 werden Zweikomponenten-Lacke auf der Basis von Umsetzungsprodukten von Verbindungen mit CH-aciden Gruppen mit olefinisch ungesättigten Verbindungen beschrieben. Als CH-acide Verbindungen werden keine Enamine genannt. Diese Systeme härten bei Raumtemperatur unzureichend und sind daher beispielsweise für Reparaturlackierungen auf dem Kraftfahrzeugsektor in Werkstätten, die keine Einbrennvorrichtungen haben, nicht geeignet.

Durch Erwärmen härtbarer Zweikomponenten-Überzugsmittel auf der Basis CH-acider Verbindungen und von Verbindungen mit mindestens zwei α,β-ungesättigten Gruppen werden auch in der EP-A-0 224 158 beschrieben. Als CH-acide Verbindungen werden dort Methantricarbonsäureamid-Gruppen enthaltende Verbindungen eingesetzt.

In der EP-A-0 203 296 wird ein isocyanatfreies Zweikomponenten-Bindemittelsystem beschrieben , das auf der Umsetzung von olefinisch ungesättigten Verbindungen mit geblockten Polyaminen beruht. Dieses System kann zwar bei Raumtemperatur gehärtet werden, jedoch werden Benzinbeständigkeit und Härte des Systems nur langsam erreicht; außerdem sind Glanz und Verlauf der Oberfläche nicht zufriedenstellend.

Diese Aufgabe wird gelöst durch das anspruchsgemäß definierte Bindemittel.

Das erfindungsgemäße Bindemittel kann organische Lösemittel enthalten, beispielsweise als Restlösemittel von der Herstellung oder durch nachträglichen Zusatz zur Einstellung günstiger Gebrauchsviskositäten. Solche Lösemittel können beispielsweise die später zur Herstellung der Überzugsmittel genannten sein.

Erfindungsgemäß wird als CH-acide Komponente eine Enaminkomponente A) mit mindestens zwei Enaminfunktionen im Molekül eingesetzt. Derartige Enaminkomponenten können hergestellt werden durch Umesterung eines aliphatischen β-Ketocarbonsäureesters mit einem Polyol und anschließende Umsetzung mit Aminen und/oder Ammoniak.

Geeignete β-Ketocarbonsäureester sind beispielsweise Ester der Acetessigsäure bzw. alkylsubstituierter Acetessigsäuren, wie α-und/oder γ-Methylacetessigsäure. Geeignete Ester dieser Säuren sind solche mit aliphatischen Alkoholen, bevorzugt niederen Alkoholen mit 1 bis 4 Kohlenstoffatomen, wie Methanol, Ethanol oder Butanol.

Als Polyole zur Umsetzung mit den β-Ketocarbonsäureestern kommen die der anspruchsgemäßen Gruppen a) bis d) in Frage. Geeignete Alkan-di- und -polyole der Gruppe a) sind solche mit geraden und verzweigten Ketten mit 2 bis 12 Kohlenstoffatomen. Sie enthalten mindestens zwei Hydroxyfunktionen, vorzugsweise jedoch mindestens drei. Beispiele hierfür sind Propandiol, Butandiol, Hexandiol, Glycerin, Trimethylolpropan und Pentaerythrit.

Beispiele für hydroxylgruppenhaltige Poly(meth)acrylate b) auf der Basis von (Meth)Acrylsäurehydroxyalkylestern mit 4 bis 12 Kohlenstoffatomen im Alkylteil sind Hydroxylalkylester der Acrylsäure oder Methacrylsäure mit Alkoholen mit mindestens zwei Hydroxylgruppen, die 1,4-Butandiol-mono(meth)acrylat, 1,6-Hexandiol-mono(meth)acrylat oder 1,2,3-Propantriol-mono(meth)acrylat. Beispiele für hydroxylgruppenhaltige Poly(meth)acrylamide b) auf der Basis von (Meth)Acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid. Der in der vorliegenden Beschreibung und den Patentansprüchen verwendete Ausdruck (Meth)Acrylsäure soll Acrylsäure und/oder Methacrylsäure bedeuten.

Die hydroxylgruppenhaltigen Poly(meth)acrylate der Komponente b) können Homo- oder Copolymerisate sein. Sie weisen einen Zahlenmittel des Molekulargewichts von 1000 bis 10000, bevorzugt von 3000 bis 6000 auf. Copolymerisierbare Monomere zur Herstellung der Copolymerisate sind α,β-ungesättigte Monomere, radikalisch polymerisierbare Monomere aus der Gruppe der Ester von α,β-ungesättigten Carbonsäuren, wie Acrylsäure oder Methacrylsäure, wobei Beispiele für die Alkoholkomponente Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, α-Methylstyrol und Vinyltoluol. Weitere Beispiele sind Vinylester kurzkettiger Carbonsäuren, wie Vinylacetat, Vinylpropionat und Vinylbutyrat.

Die hydroxylgruppenhaltigen Poly(meth)acrylate der vorstehend definierten Komponente c) können modifizierte Poly(meth)acrylat-homo- und -copolymere sein, wie sie unter b) beschrieben werden, deren Hydroxylgruppen ganz oder partiell mit cyclischen Estern, wie z. B. von Hydroxycarbonsäure mit 4 bis 6 Kohlenstoffatomen, wie Butyrolacton oder Caprolacton umgesetzt sein können. Die erhaltenen modifizierten Poly(meth)acrylate der Komponente c) weisen ein Zahlenmittel des Molekulargewichts Mn von 1000 bis 10000 auf.

Beispiele für die Polyesterpolyole und Polyetherpolyole der Komponente d) sind solche mit einem Zahlenmittel des Molekulargewichts Mn von 500 bis 2000. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid.

Die Synthese der Enaminkomponente mit mindestens zwei Enaminfunktionen kann beispielsweise über mehrere Stufen erfolgen. Das Polyol wird zunächst nach Entfernen von gegebenenfalls vorhandenem Lösemittel mit dem aliphatischen β-Ketocarbonsäureester umgeestert und nach Entfernen des freigewordenen Alkohols werden die erhaltenen β-Ketoester mit Ammoniak und/oder den primären oder sekundären Aminen unter Wasserabspaltung zur Enaminfunktion umgesetzt.

Bei der Umesterung des Polyols kann beispielsweise so verfahren werden, daß das, gegebenenfalls von Lösemittel durch Anlegen eines Vakuums befreite Polyol vorgelegt wird. Der β-Ketocarbonsäureester wird nun im Überschuß zugegeben, beispielsweise zugetropft. Die Reaktion erfolgt bei erhöhter Temperatur; der freigesetzte Alkohol wird aus dem System entfernt.

Zur Beschleunigung der Reaktion ist auch die Zugabe eines Katalysators möglich. Beispiele für derartige Katalysatoren sind Säuren, wie Ameisensäure oder p-Toluolsulfonsäure. Es ist günstig bei der Umesterung die Reaktionstemperatur kontinuierlich zu erhöhen (beispielsweise in Schritten von 10°C/20 min), bis eine Temperatur erreicht ist, die knapp (etwa 10°C) unterhalb des Siedepunktes des β-Ketocarbonsäureesters liegt. Nach quantitativer Umesterung wird der überschüssige β-Ketocarbonsäureester entfernt, beispielsweise durch Anlegen eines Vakuums. Anschließend kann das Gemisch abgekühlt und mit einem inerten, mit Wasser azeotrop destillierbaren Lösemittel, beispielsweise aromatischer Kohlenwasserstoff, wie Toluol oder Xylol verdünnt werden (beispielsweise auf Festkörpergehalte in der Größenordnung von 70%). Dann erfolgt die Umsetzung mit Ammoniak und/oder primärem oder sekundärem Amin. Diese kann beispielsweise durch Zutropfen einer wäßrigen Ammoniaklösung (beispielsweise mit Konzentrationen bis zu 25%) oder durch Zusetzen eines primären oder sekundären Amins im Unterschuß (etwa 90% bezogen auf den eingebauten β-Ketocarbonsäureester) erfolgen. Auch diese Reaktion kann katalysiert werden. Geeignete Katalysatoren sind Säuren, wie Ameisensäure oder p-Toluolsulfonsäure. Das bei dieser Reaktion freiwerdende Wasser wird azeotrop mit dem inerten Lösemittel ausgekreist. Nach beendeter Reaktion kann auf einen gewünschten Festkörpergehalt eingestellt werden. Hierzu kann entweder vorhandenes Lösemittel ganz oder teilweise entfernt werden, z.B. durch Destillation. Es kann jedoch auch weiteres Lösemittel oder Wasser zugesetzt werden. Hierzu werden z.B. solche Lösemittel verwendet, die in den später zu bereitenden Überzugsmittelzusammensetzungen benötigt werden. Beispiele für solche Lösemittel werden später bei der Beschreibung der herstellbaren Überzugsmittelzusammensetzungen genannt.

Neben Ammoniak sind geeignte Amine zur Herstellung der Enaminkomponente primäre und sekundäre Amine. Es handelt sich dabei um aliphatische, lineare oder verzweigte und cycloaliphatische Monoamine, deren Alkylreste 1 bis 10 Kohlenstoffatome aufweisen. Bevorzugte Beispiele für primäre Amine sind Methyl-, Ethyl-, Propyl-, Butyl-, und insbesondere n-Hexyl-und n-Octylamin.

Bevorzugte Beispiele für sekundäre Amine sind Di-n-butylamin, Diisobutylamin, Diisopropylamin, Dimethylamin, Dioctylamin und Dicyclohexylamin.

Besonders vorteilhaft hat sich die Umsetzung mit sekundären Aminen erwiesen, wodurch tertiäre Enamine entstehen. Infolge der sperrigen Alkylgruppen am N-Atom wird eine mögliche Chelatisierung von Metallionen durch die Enaminstruktur behindert, so daß Verfärbungen, die durch derartige Chelatbildung auftreten können, weitgehend ausgeschlossen werden.

Als weitere Bindemittelkomponente B) wird in den erfindungsgemäßen Bindemittelzusammensetzungen eine Verbindung eingesetzt, die mindestens zwei ungesättigte funktionelle Gruppen der allgemeinen Formel (I) R₁R₂C=CR₃-X aufweist, worin R₁, R₂, R₃ und X wie in den Ansprüchen definiert sind. Diese Gruppen können über kurz-oder langkettige Kohlenwasserstoffreste, Oligomere und/oder Polymere miteinander verbunden sein, wobei diese Oligomeren und Polymeren z.B. Zahlenmittel des Molekulargewichts (Mn) von 1000 bis 10000 aufweisen können. Als Oligomere und Polymere kommen beispielsweise gesättigte und/oder ungesättigte zwei oder mehrere Hydroxylgruppen enthaltende Polyether, Polyester oder Polyurethane in Frage, z. B. solche auf der Basis von Maleinsäure, Phthalsäure und Diolen, Hydroxylgruppen enthaltenden Acrylharzen, aliphatischen oder vorzugsweise aromatischen, gegebenenfalls Hydroxylgruppen enthaltenden Epoxidharzen, z.B. solchen auf der Basis von Diphenylolpropan und/oder-methan, Hydantoin und/oder Aminharzen. Dabei kann der Rest der allgemeinen Formel (I) esterartig gebunden sein, z.B. durch Anlagerung von Acryl- oder Methacrylsäure oder deren Derivaten an Epoxygruppen von Epoxidharz oder durch Veresterung an Hydroxylgruppen von Polyolen. Geeignete mehrwertige Alkohole sind beispielsweise Alkandiole und Triole mit 2 bis 8 Kohlenstoffatomen, wie Ethandiol, die verschiedenen Propan-, Butan-, Hexan- und Octandiole, oder deren Homologe, die entsprechenden Oligomeren Ether, ferner Glycerin, Trimethylolethan oder Trimethylolpropan, Hexantriol, Pentaerythrit, Dipentaerythrit, Sorbit, sowie Polyvinylalkohol.

Die Gruppen der allgemeinen Formel (I) können auch über NH-Gruppen und/oder OH-Gruppen an Polyamine, Polyamide oder Polyiminoamide mit mindestens zwei NH-Gruppen oder mindestens einer NH-Gruppe und mindestens einer OH-Gruppe gebunden sein. Als NH-Gruppen enthaltende Ausgangsverbindungen für derartige Verbindungen können beispielsweise Di-und Polyamine genannt werden, wie Alkylendiamine und deren Oligomere, wie Ethylendiamin, Propylendiamin, Butylendiamin, Diethylentriamin, Tetramine und höhere Homologe dieser Amine, sowie Aminoalkohole wie Diethanolamin oder dergleichen. Als Amine kommen z.B. auch Aminocarbonsäureester mehrwertiger Alkohole in Frage. Als Verbindung mit NH-Gruppen kommen z.B. in Frage Acryl- oder Methacrylsäurepolyamide, ferner Polyurethane, z.B. Polyisocyanate, die in Form von Polyurethangruppen verkappt sind, wie solche, die durch Umsetzung von Hydroxyethylacrylat mit Polyisocyanaten erhalten werden, Aminharze wie Methoxymelamine, vorzugsweise Hexamethylolmelamin, Harnstoffharze, wobei der Rest der allgemeinen Formel (I) mit der Gruppierung -CO- an die Amingruppen dieser Verbindungen als Amid gebunden ist. Falls diese Aminverbindungen über OH-Gruppen bzw. Hydroxyalkylgruppen verfügen, ist es auch möglich, daß der Rest der Formel (I) esterartig oder aber über eine Ethergruppe an diese Verbindungen gebunden ist. Für die Etherbindung des Restes der Formel (I) kann man von einem Hydroxyalkylester oder einem Hydroxyalkylamid einer ungesättigten Säure wie Acrylsäure ausgehen.

Der Rest der allgemeinen Formel (I) in der Komponente B) kann von einer ein- oder mehrfach ungesättigten Monocarbonsäure, z . B. mit 2 bis 10, vorzugsweise 3 bis 6 Kohlenstoffatomen, wie Zimtsäure, Crotonsäure, Citraconsäure, Mesaconsäure, Dihydrolävulinsäure, Sorbinsäure, vorzugsweise Acrylsäure und/oder Methacrylsäure abgeleitet sein.

Die Komponente B) kann frei von Lösemitteln sein oder aber Restlösemittel von ihrer Herstellung enthalten, z.B. aliphatische und/oder aromatische Kohlenwasserstoffe. Der Festkörpergehalt kann auf gewünschte Werte eingestellt werden, z.B. durch Entfernen des Restlösemittels, beispielsweise durch Destillation oder durch Zusatz von Wasser oder Lösemitteln, die für die anschließende Bereitung von Überzugsmitteln benötigt werden und später beschrieben werden. Bevorzugt wird das gleiche Lösemittel wie für die Komponente A) verwendet.

Die erfindungsgemäßen Bindemittel liegen als Zweikomponenten Systeme vor. Die Komponenten A) und B) werden getrennt gelagert und erst vor der Anwendung miteinander vermischt. Die Komponente A) enthält eingemischt als Komponente C) Katalysatoren in Form von Lewis-Basen oder Brönstedt-Basen, wobei die konjugierten Säuren der letzteren einen pKA-Wert von mindestens 10 haben. Die Komponente C) kann aus einem oder mehreren Katalysatoren bestehen. Als besonders geeignet erwiesen sich Lewis-Basen, wie z.B. solche der Gruppe von cycloaliphatischen Aminen, wie Diazabicyclooctan (DABCO),tert.-aliphatischen Aminen, wie Triethylamin, Tripropylamin, N-Methyldiethanolamin, N-Methyl-diisopropylamin oder N-Butyl-diethanolamin, sowie Amidinen wie Diazabicyloundecen (DBU), und Guanidinen, wie z.B. N,N,N′,N′-Tetramethylguanidin. Weitere Beispiele sind alkyl- oder arylsubstituierte Phosphane, wie z.B. Tributylphosphan, Triphenylphosphan, Tris-p-tolylphosphan, Methyldiphenylphosphan, sowie hydroxy- und aminfunktionalisierte Phosphane, wie z.B. Trishydroxymethylphosphan und Tris-dimethylamino-ethylphosphan.

Beispiele für die einsetzbaren Brönstedt-Basen sind Alkoholate, wie Natrium- oder Kaliumethylat, quartäre Ammoniumverbindungen, wie Alkyl-, Aryl- oder Benzylammoniumhydroxide oder -halogenide, wie z.B. Tetraethyl- oder Tetrabutylammoniumhydroxid oder -fluorid, sowie Trialkyl- oder Triaryl-phosphoniumsalze oder -hydroxide.

Die Menge der Katalysatoren beträgt im allgemeinen 0,01 bis 5 Gew.-%, vorzugsweise 0,02 bis 2 Gew.-%, bezogen auf den Gesamtfeststoffgehalt der Komponenten A) und B).

Das Verhältnis der Äquivalentgewichte der Komponenten A) und B) liegt bei 2:1 bis 1:1,5, z.B. bei 1 bis 1,5:1.

Das Äquivalentgewicht wird als die Menge in Gramm definiert, die jeweils 1 Mol der funktionellen Gruppe enthält, also bei der Komponente A) von der Enamingruppe und bei der Komponente B) von der olefinischen Doppelbindung.

Bei den erfindungsgemäßen Bindemittelzusammensetzungen handelt es sich um sogenannte Zweikomponenten-Systeme. Dies bedeutet, daß die Komponenten A) und B) getrennt gelagert werden und erst vor der Anwendung bzw. zur Anwendung beispielsweise zur Herstellung von Überzugsmitteln vermischt werden. Die erfindungsgemäßen Bindemittelzusammensetzungen können in üblicher Weise zu Überzugsmitteln, beispielsweise Lacken formuliert werden. Dies erfolgt im allgemeinen durch Zusatz von Lösemitteln oder Wasser. Dabei ist es möglich ,eine Mischung der Komponenten A), die auch die Komponente B) enthält, und B) zu bereiten und diese in üblicher Weise durch den Zusatz von Lösemitteln oder Wasser und üblichen Additiven zu Überzugsmitteln aufzuarbeiten. Es besteht jedoch auch die Möglichkeit zunächst eine der Komponenten A) oder B) durch Zusatz von Lösemitteln oder Wasser und üblichen Additiven aufzubereiten und dann die andere Komponente zuzusetzen.

Geeignete organische Lösemittel für die Herstellung von Überzugsmitteln, beispielsweise Lacken, sind solche, wie sie auch bei der Herstellung der Einzelkomponenten A) und B) verwendet werden. Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Zur Herstellung der Überzugsmittel können übliche Additive zugesetzt werden, wie sie beispielsweise auf dem Lacksektor üblich sind.

Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente. Die erfindungsgemäßen Bindemittelzusammensetzungen eignen sich besonders günstig für Überzugsmittel, die derartige Effektpigmente enthalten. Bevorzugt enthalten sie Effektpigmente zusammen mit transparenten farbgebenden Pigmenten oder deckende farbgebende Pigmente zusammen mit Füllstoffen.

Weitere Beispiele für Additive sind Füllstoffe, wie z.B. Talkum und Silikate; Weichmacher, Lichtschutzmittel, Stabilisatoren und Verlaufsmittel, wie Silikonöle.

Die aus den erfindungsgemäßen Bindemitteln hergestellten Überzugsmittel werden auf die gewünschte Applikationsviskosität durch entsprechende Regelung des Zusatzes von Lösemitteln und/oder Additiven eingestellt.

Die Überzugsmittel können je nach Mengenverhältnis der Komponenten A) zur Komponente B), Äquivalentgewicht und Katalysatormenge auf Topfzeiten zwischen 1 und 24 Stunden eingestellt werden, so daß eine lange Verarbeitungsdauer der aus dem Zweikomponenten-Bindemittelsystem fertiggestellten Überzugsmittel gewährleistet ist.

Die Applikation der so hergestellten Überzugsmittel kann in üblicher Weise erfolgen, beispielsweise durch Tauchen, Spritzen, Streichen oder auf elektrostatischem Wege.

Die Aushärtung von aus den Überzugsmitteln erstellten Überzügen kann in einem weiten Temperaturbereich von beispielsweise -10°C bis 200°C erfolgen. Bevorzugt ist der Temperaturbereich von 20°C bis 80°C, beispielsweise Raumtemperatur.

Aus den erfindungsgemäßen Bindemitteln können verschiedene Arten von Überzugsmitteln hergestellt werden, beispielsweise Lacke, die als pigmentierte Decklacke oder auch als Klarlacke bereitet werden können. Sie sind jedoch auch zur Herstellung von beispielsweise Füllern geeignet.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel können auch im Mehrschichtverfahren eingesetzt werden. So können sie beispielsweise auf übliche Grundierungen, Basislacke, Füller oder auf bereits vorhandene Decklacke aufgetragen werden. Der Auftrag kann entweder auf die gehärteten Vorschichten erfolgen, oder naß-in-naß durchgeführt werden, wobei anschließend ein gemeinsames Einbrennen der Mehrschichtüberzüge erfolgt. Es sind sämtliche üblichen Vorbeschichtungen geeignet.

Ein bevorzugtes Anwendunggebiet für die erfindungsgemäßen Bindemittel stellt die Bereitstellung von Überzugsmitteln für Lackierungen auf dem Gebiet des Kraftfahrzeugsektors dar. Durch die günstigen Härtungsbedingungen der aus den erfindungsgemäßen Bindemitteln hergestellten Überzugsmittel sind diese besonders auch für Kraftfahrzeug-Reparaturlackierungen geeignet.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen Bindemittelzusammensetzungen in Klarlacken, Füllern oder Decklacken.

In jedem Falle erhält man mit den aus den erfindungsgemäßen Bindemitteln hergestellten Überzugsmitteln Filme mit gutem Glanz, guter Härte und guter Wasser und Lösemittelbeständigkeit, insbesondere Benzinbeständigkeit. Die Aushärtung erfolgt sehr rasch; so ist beispielsweise eine Staubtrocknung schon innerhalb weniger Minuten, wie etwa 10 Minuten, bei Raumtemperatur erzielbar.

Die folgenden Beispiele dienen zur Erläuterung der Erfindung. Alle Teile (T) und Prozentangaben (%) beziehen sich auf das Gewicht.

### Synthese von Enamin-funktionalisierten Harzen (Komponente A) )

### BEISPIEL 1

a) Synthese eines OH-funktionellen Harzes In einem 4 l-Dreihalskolben, der mit Rührer, Thermometer, Rückflußkolben und Tropftrichter versehen ist, werden 600 T Toluol vorgelegt und unter Rühren auf 111°C erhitzt. Innerhalb von 5h wird eine Mischung aus
   235 T Methylmethacrylat
   280 T Styrol
   307 T Ethylmethacrylat
   543 T Butandiolmonoacrylat und
   40 T Tert.-Butylperoctoat
   zudosiert. Das entstandene Produkt hat eine Viskosität von 910 mPas (25°C), einen Festkörper von 69,6% (1h/150°C) und eine OH Zahl von 150.
b) 1300 T des so hergestellten OH-funktionellen Harzes werden unter Anlegen eines Vakuums bei 110°C vom Lösemittel befreit. Danach werden bei 110°C 585 T Acetessigsäureethylester zugetropft. Es wird auf 130°C erwärmt, wobei Ethanol (ca. 112 g) abspaltet. Nach stufenweiser Erhöhung der Temperatur auf 170°C werden danach unter Vakuum alle flüchtigen Bestandteile abgezogen. Zuletzt wird mit 1000 T Xylol verdünnt. Das Produkt hat einen Festkörper von 61,6% (1h/150°C) und nach Einstellen des Festkörpers auf 50% mittels Butylacetat 98/100 eine Viskosität von 490 mPas (25°C).
c) 400 T des so hergestellten Acetessigesterfunktionalisierten Harzes werden mit 1 T 98%iger Ameisensäure und 43 T 25%iger wäßriger NH₃-Lösung vorgelegt und auf 85°C erhitzt, wobei innerhalb von 2 1/2h ca. 11 g Wasser abspaltet. Nach beendeter Reaktion wird mit Butylacetat 98/100 ein Festkörpergehalt von 50% eingestellt. Das Produkt hat dann eine Viskosität von 535 mPas (25°C).

### BEISPIEL 2

900 T des Acetessigester-funktionalisierten Harzes von Beispiel 1 werden mit 1 T 98%iger Ameisensäure und 134 T n-Hexylamin versetzt, auf 85°C erhitzt und innerhalb von 2 1/2h ca. 24 g Wasser abgespalten. Danach wird mit Butylacetat 98/100 ein Festkörper von 50% eingestellt. Das Produkt hat dann eine Viskosität von 1010 mPas (25°C).

### BEISPIEL 3

900 T des Acetessigesterfunktionalisierten Harzes von Beispiel 1 wurden mit 1 T 98%iger Ameisensäure und 195 T Di-n-Butylamin versetzt. Nach Erhitzen auf 85°C werden innerhalb von 3h ca. 27 g Wasser abgespalten. Danach wird mit Butylacetat 98/100 ein Festkörper von 50% eingestellt. Das Produkt hat dann eine Viskosität von 1390 mPas (25°C).

### Synthese einer Acryloyl-ungesättigten Verbindung (Komponente B))

### BEISPIEL 4

a) In einem 4 l-Dreihalskolben, der mit Rührer, Thermometer, Tropftrichter und einem Rückflußkühler versehen ist, werden 1000 T Xylol vorgelegt und unter Rühren auf 90°C erhitzt. Innerhalb von 5h wird eine Mischung aus
   380 T Glycidylmethacrylat
   128 T Butylmethacrylat
   252 T Butylacrylat
   200 T Styrol und
   40 T Tert.-Butylperoctoat
   zugetropft. Das erhaltene epoxifunktionelle Harz hat eine Viskosität von 70 mPas (25°C) und einen Festkörper von 50,1% (1h/150°C).
b) 800 T dieses Harzes werden in einem 2 l-Kolben, der mit Rührer, Thermometer, Tropftrichter und Rückflußkühler versehen ist, unter Rühren auf 90°C erwärmt. Bei dieser Temperatur wird eine Mischung aus 50 T Acrylsäure und 1 T Triphenylphosphit innerhalb von 20 min. zugetropft und anschließend bis zum Erreichen einer Säurezahl von 1 umgesetzt.

### Herstellung von Lacken

### BEISPIEL 5

27 T Enamin-funktionalisiertes Harz von Beispiel 1 (Komponente A) ), 73 T Acryloylungesättigte Verbindung von Beispiel 4 (Komponente B)), 6,4 T Katalysatorlösung (20 T Triphenylphosphin in 80 T Butylacetat), 0,25 T Verlaufsmittel auf der Basis eines organofunktionellen Silikonöls (Handelsprodukt Additol XL 121), 1,6 T Lichtschutzmittel (0,8 T Lösung eines sterisch gehinderten Amins (Handelsprodukt Tinuvin 292) und 0,8 T eines Benzotriazolderivats (Handelsprodukt Tinuvin 1130)
wurden homogenisiert und mit einer Lösemittelmischung bestehend aus Butylglycolacetat:Methoxypropylacetat:Xylol:Butylacetat im Verhältnis 20:20:30:30 auf eine Verarbeitungsviskosität von 17 bis 20˝ nach DIN 53211 eingestellt und auf einen handelsüblichen Basislack auf der Basis organischer Lösemittel naß-in-naß in 2 bis 3 Spritzgängen mit einer Trockenfilmdicke von 40 bis 100 »m appliziert.

### BEISPIEL 6

Es wurde wie in Beispiel 5 gearbeitet, wobei jedoch als Komponente A)
33 T des Enamin-funktionalisierten Harzes von Beispiel 2 und als Komponente B)
67 T der Acryloyl-ungesättigten Verbindungen von Beispiel 4 verwendet wurden.

### BEISPIEL 7

Herstellung eines pigmentierten Decklackes:
51 T Acryloyl-ungesättigtes Harz von Beispiel 4 (Komponente B)),
1,5 T Verlaufsmittel (wie Beispiel 5), und
8,3 T eines organischen Rotpigments
wurden mit einem Dissolver vordispergiert und dann in einer Rührwerkskugelmühle gemahlen.

Die so erhaltene Pigmentdispersion wurde mit weiteren 163 T des Acryloylungesättigten Harzes unter Rühren vermischt.

Dieser so erhaltene pigmentierte Lack wurde mit
79 T Enamin-funktionalisiertem Harz von Beispiel 1 (Komponente A) und
9 T Katalysatorlösung (20 T Triphenylphosphin und 4 T Diazabicycloundecen in 80 T Butylacetat)
vermischt, mit Butylacetat auf eine Verarbeitungsviskosität von 17 bis 20˝ nach DIN 53211 eingestellt und auf einen vorgetrockneten, handelsüblichen Polyurethar-Füller mit einer Trockenfilmdicke von 50 bis 80 »m appliziert.

Die in den Beispielen 5, 6 und 7 applizierten Systeme zeigten bei Raumtemperatur eine rasche Staubtrocknung (10 min.), eine schnelle Vernetzung, ein rasches Erreichen der Superbenzinbeständigkeit (nach 16 Stunden) sowie eine hochglänzende Oberfläche mit gutem Verlauf und guter Härte.

## Patentansprüche

1. Bindemittelzusammensetzung auf der Basis einer CH-aziden Komponente (A) und einer α,β-ungesättigten Komponente (B), **dadurch gekennzeichnet**, daß sie enthält
A) als CH-azide Komponente ein Polymer mit mindestens zwei Enaminfunktionen im Molekül, erhalten durch Umesterung eines aliphatischen β-Ketocarbonsäureesters mit einer oder mehreren hydroxylgruppenhaltigen Verbindungen oder Polymeren, die mindestens zwei Hydroxylgruppen im Molekül enthalten mit einer OH-Zahl von mindestens 50 und einem Zahlenmittel des Molekulargewichts von bis zu 10000,
und anschließende Umsetzung mit Ammoniak, primären und/oder sekundären Aminen, und
B) als α,β-ungesättigte Komponente eine Verbindung mit mindestens zwei Gruppen der allgemeinen Formel
R₁ R₂C=CR₃X (I
)
worin X die Bedeutung von -CO- hat, das über den Rest eines zwei- oder mehrwertigen Alkohols, eines Di- oder Polyamins oder Aminoalkohols an eine weitere Gruppe R₁R₂C=CR₃ X gebunden ist, R₁R₂ und R₃ unabhängig voneinander ein Wasserstoffatom oder ein gerader oder verzweigter Alkylrest mit 1 bis 10 Kohlenstoffatomen, der olefinische Unsättigungen und/oder eine oder mehrere Hydroxylgruppen aufweisen kann,
sind,
wobei die Komponenten A) und B) im Verhältnis von 2:1 bis 1:1,5, bezogen auf ihre Äquivalentgewichte, vorliegen,
die Zusammensetzung als Zweikomponenten-System vorliegt und die Komponente A) zusätzlich enthält
C) 0,01 bis 5 Gew.%, bezogen auf die Summe der Gewichte der Komponenten A) und B) eines Katalysators in Form einer Lewis- oder Brönstedt-Base, wobei die konjugierten Säuren der letzteren einen pKA-Wert von mindestens 10 haben.

2. Bindemittelzusammensetzung nach Anspruch 1, dadurch gekennzeichnet, daß die hydroxylgruppenhaltige Verbindung oder das hydroxylgruppenhaltige Polymere ausgewählt ist aus
a) Polyolen aus der Gruppe von geraden oder verzweigten Alkan-di- und polyolen mit 2 bis 12 Kohlenstoffatomen, oder
b) hydroxylgruppenhaltigen Poly(meth)acrylaten oder Poly(meth)acrylamiden auf der Basis von (Meth)Acrylsäurehydroxyalkylestern mit 4 bis 12 Kohlenstoffatomen im Alkylteil oder (Meth)Acrylsäure-hydroxyalkylamiden mit 2 bis 12 Kohlenstoffatomen im Alkylteil, gegebenenfalls copolymerisiert mit α,β-ungesättigten Monomeren, mit einem Zahlenmittel des Molekulargewichts Mn von 1000 bis 10000, oder
c) hydroxylgruppenhaltigen Poly(meth)acrylaten auf der Basis von (Meth)Acrylsäurehydroxyalkylestern mit 2 bis 12 Kohlenstoffatomen im Alkylteil und gegebenenfalls copolymerisierbaren α,β-ungesättigten Monomeren, die mit cyclischen Estern von Hydroxycarbonsäuren mit 4 bis 6 Kohlenstoffatomen modifiziert sind, mit einem Zahlenmittel des Molekulargewichts Mn von 1000 bis 10000, oder
d) Polyester-Polyolen oder Polyether-Polyolen jeweils mit einem Zahlenmittel des Molekulargewichts Mn von 500 bis 2000.

3. Verwendung der Bindemittelzusammensetzung nach Anspruch 1 oder 2 in Überzugsmitteln.

4. Verwendung nach Anspruch 3 in Überzugsmitteln, die als Effektpigmente Metallschuppenpigmente und/oder Perlglanzpigmente enthalten.

5. Verwendung nach Anspruch 3 in Überzugsmitteln, die Metallschuppenpigmente und gegebenenfalls farbgebende Pigmente sowie gegebenenfalls Füllstoffe enthalten.

6. Verwendung nach Anspruch 3 in Überzugsmitteln, die farbgebende Pigmente und gegebenenfalls Füllstoffe enthalten.

7. Verwendung nach Anspruch 3 in Überzugsmitteln, die Perlglanzpigmente und farbgebende Pigmente sowie gegebenenfalls Metallschuppenpigmente enthalten.

8. Verwendung der Bindemittelzusammensetzung nach Anspruch 1 oder 2 zur Herstellung eines Überzuges auf einem Substrat.

9. Verwendung der Bindemittelzusammensetzung nach Anspruch 1 oder 2 in Überzugsmitteln für die Autoreparaturlackierung.

10. Verwendung der Bindemittelzusammensetzung gemäß Anspruch 1 oder 2 in Überzugsmitteln für die Autoreparaturlackierung bei Härtungstemperaturen im Bereich von 20 bis 80°C.

11. Verwendung der Bindemittelzusammensetzung gemäß Anspruch 1 oder 2 in Klarlacken, Füllern oder Decklacken.

12. Verwendung der Bindemittelzusammensetzung gemäß Anspruch 1 oder 2 in Metallpigmente enthaltenden Basislacken und/oder Klarlacken für eine mehrschichtige Lackierung.

13. Verwendung der Bindemittelzusammensetzung gemäß Anspruch 1 oder 2 in Überzugsmitteln für Holz, Textilien, Kunststoffe, Keramik und Glas.

14. Überzugsmittel, enthaltend eine Bindemittelzusammensetzung gemäß einem der Ansprüche 1 oder 2, zusammen mit Wasser, und/oder einem oder mehreren organischen Lösemitteln, sowie lackübliche Additive.

## Claims

1. Binder composition based on a CH-acid component (A) and an α,β-unsaturated component (B), characterised in that it contains
A) as the CH-acid component a polymer having at least two enamine functional groups per molecule, obtained by transesterification of an aliphatic β-ketocarboxylic acid ester with one or more compounds or polymers containing hydroxyl groups which have at least two hydroxyl groups per molecule, having an OH value of at least 50 and a number average molecular weight of up to 10,000, and subsequent reaction with ammonia, primary and/or secondary amines and
B) as α,β-unsaturate component a compound having at least two groups of the general formula
R₁R₂C=CR₃X (I)
in which X means -CO-, which is attached via the residue of a di- or polyhydric alcohol, of a di- or polyamine or aminoalcohol to another group R₁R₂C=CR₃X, R₁R₂ and R₃ are mutually independently a hydrogen atom or a straight or branched alkyl residue with 1 to 10 carbon atoms, which may have olefinic unsaturations and/or one or more hydroxyl groups,
wherein components A) and B) are present in a ratio of 2:1 to 1:1.5 related to their equivalent weights,
the composition is in the form of a two-component system and component A) additionally contains
C) 0.01 to 5 wt.%, related to the sum of the weights of components A) and B), of a catalyst in the form of a Lewis or Brønsted base, wherein the conjugated acids of the latter have a pKA value of at least 10.

2. Binder composition according to claim 1, characterised in that the compound containing hydroxyl groups or the polymer containing hydroxyl groups is selected from
a) polyols from the group comprising straight or branched alkanedi- and polyols with 2 to 12 carbon atoms, or
b) poly(meth)acrylates or poly(meth)acrylamides containing hydroxyl groups based on (meth)acrylic acid hydroxyalkyl esters with 4 to 12 carbon atoms in the alkyl portion or (meth)acrylic acid hydroxyalkylamides with 2 to 12 carbon atoms in the alkyl portion, optionally copolymerised with α,β-unsaturated monomers, with a number average molecular weight Mₙ of 1,000 to 10,000, or
c) poly(meth)acrylates containing hydroxyl groups based on (meth)acrylic acid hydroxyalkyl esters with 2 to 12 carbon atoms in the alkyl portion and optionally copolymerisable α,β-unsaturated monomers, which are modified with cyclic esters of hydroxycarboxylic acids having 4 to 6 carbon atoms, with a number average molecular weight Mₙ of 1,000 to 10,000, or
d) polyester polyols or polyether polyols each having a number average molecular weight Mₙ of 500 to 2,000.

3. Use of the binder composition according to claim 1 or 2 in coating compositions.

4. Use according to claim 3 in coating compositions which contain metal flake pigments and/or pearlescent pigments as effect pigments.

5. Use according to claim 3 in coating compositions which contain metal flake pigments and optionally chromophoric pigments optionally together with extenders.

6. Use according to claim 3 in coating compositions which contain chromophoric pigments and optionally extenders.

7. Use according to claim 3 in coating compositions which contain pearlescent pigments and chromophoric pigments optionally together with metal flake pigments.

8. Use of the binder composition according to claim 1 or 2 for the production of a coating on a substrate.

9. Use of the binder composition according to claim 1 or 2 in coating compositions for automotive repair lacquer coating.

10. Use of the binder composition according to claim 1 or 2 in coating compositions for automotive repair lacquer coating at curing temperatures in the range from 20 to 80°C.

11. Use of the binder composition according to claim 1 or 2 in clear lacquers, surfacers or topcoat lacquers.

12. Use of the binder composition according to claim 1 or 2 in base lacquers containing metal pigments and/or clear lacquers for a multilayer lacquer coating.

13. Use of the binder composition according to claim 1 or 2 in coating compositions for wood, textiles, plastics, ceramics and glass.

14. Coating compositions containing a binder composition according to one of claims 1 or 2, together with water and/or one or more organic solvents, together with customary lacquer additives.

## Revendications

1. Composition de liant à base d'un composant CH acide (A) et d'un composant α, β insaturé (B), caractérisée en ce qu'elle contient
A) comme composant CH acide, un polymère ayant au moins deux fonctions énamines dans la molécule, obtenu par transestérification d'un ester d'acide β-cétocarboxylique aliphatique avec un ou plusieurs composé(s) contenant des groupes hydroxyles ou des polymères contenant au moins deux groupes hydroxyles dans la molécule, ayant un indice OH d'au moins 50 et un poids moléculaire moyen en nombre allant jusqu'à 10 000,
et réaction subséquente avec l'ammoniac, des amines primaires et/ou des amines secondaires, et
B) comme composant α, β insaturé, un composé ayant au moins deux groupes de formule générale
R₁R₂C=CR₃X (I)
où X signifie -CO- lié par le reste d'un alcool di- ou polyvalent, d'une di- ou polyamine ou d'un aminoalcool à un autre groupe R₁R₂C=CR₃X, R₁, R₂, et R₃ étant, indépendamment les uns des autres, un atome d'hydrogène ou un reste alkyle linéaire ou ramifié comportant 1 à 10 atomes de carbone, pouvant présenter des insaturations oléfiniques et/ou un ou plusieurs groupes hydroxyles, les composants A) et B) étant dans un rapport allant de 2:1 à 1:1,5, rapporté à leur poids équivalent, la composition se présentant sous la forme d'un système à deux composants et le composant A) contenant en plus
C) 0,01 à 5% en poids d'un catalyseur sous forme d'une base de Lewis ou d'une base de Brönstedt, rapporté à la somme des poids des composants A) et B), les acides conjugués de celles-ci ayant un pKA d'au moins 10.

2. Composition de liant selon la revendication 1, caractérisée en ce que le composé contenant des groupes hydroxyles ou le polymère contenant des groupes hydroxyles est choisi parmi
a) les polyols provenant du groupe des alcanediols et des alcanepolyols linéaires ou ramifiés comportant 2 à 12 atomes de carbone ou
b) les poly(méth)acrylates ou poly(méth)acrylamides contenant des groupes hydroxyles à base d'esters hydroxyalkyliques de l'acide (méth)acrylique contenant 4 à 12 atomes de carbone dans la partie alkyle ou d'amides hydroxyalkyliques de l'acide (méth)acrylique contenant 2 à 12 atomes de carbone dans la partie alkyle, éventuellement copolymérisés avec des monomères α,β insaturés, ayant un poids moléculaire moyen en nombre Mn compris entre 1 000 et 10 000 ou
c) les poly(méth)acrylates contenant des groupes hydroxyles à base d'esters hydroxyalkyliques de l'acide (méth)acrylique ayant 2 à 12 atomes de carbone dans la partie alkyle et éventuellement les monomères α,β insaturés copolymérisables, modifiés avec des esters cycliques d'acides hydroxycarboxyliques ayant 4 à 6 atomes de carbone, présentant un poids moléculaire moyen en nombre Mn compris entre 1 000 et 10 000 ou
d) les polyester-polyols ou les polyéther-polyols ayant un poids moléculaire moyen en nombre Mn compris entre 500 et 2 000.

3. Utilisation de la composition de liant selon la revendication 1 ou 2 dans les compositions de revêtement.

4. Utilisation selon la revendication 3 dans les compositions de revêtement contentant comme pigments à effets spéciaux des pigments métalliques lamellaires et/ou des pigments nacrés.

5. Utilisation selon la revendication 3 dans les compositions de revêtement contenant des pigments métalliques lamellaires et éventuellement des pigments colorants, ainsi qu'éventuellement des charges.

6. Utilisation selon la revendication 3 dans les compositions de revêtement contenant des pigments colorants et éventuellement des charges.

7. Utilisation selon la revendication 3 dans les compositions de revêtement, contenant des pigments nacrés et des pigments colorants, ainsi qu'éventuellement des pigments métalliques lamellaires.

8. Utilisation de la composition de liant selon la revendication 1 ou 2 pour la réalisation d'un revêtement sur un substrat.

9. Utilisation de la composition de liant selon la revendication 1 ou 2 dans les compositions de revêtement pour les retouches de couches de peinture de voitures.

10. Utilisation de la composition de liant selon la revendication 1 ou 2 dans les compositions de revêtement pour les retouches de couches de peinture de voitures à des températures de durcissement comprises entre 20 et 80°C.

11. Utilisation de la composition de liant selon la revendication 1 ou 2 dans les vernis transparents, les charges ou les vernis de surface.

12. Utilisation de la composition de liant selon la revendication 1 ou 2 dans des vernis de base et/ou dans des vernis transparents contenant des pigments métalliques pour un revêtement multi-couche.

13. Utilisation de la composition de liant selon la revendication 1 ou 2 dans les composition de revêtement pour bois, matières textiles, matières plastiques, céramique et verre.

14. Composition de revêtement contenant une composition de liant selon la revendication 1 ou 2 avec de l'eau et/ou un ou plusieurs solvant(s) organique(s), ainsi que les additifs usuels dans les vernis.
